# DEMANDE DE BREVET EUROPEEN

(11) **EP 2 053 312 A2**
(43) Date de publication de la demande: **29.04.2009**
(21) Numéro de dépôt: 08167052.3
(22) Date de dépôt: 20.10.2008
(51) Int. Cl.: F23R 3/06

(54) **Chambre de combustion à dilution optimisée et turbomachine en étant munie**

(30) Priorité: 22.10.2007 FR 0707357
(71) Demandeur: SNECMA, 75015 Paris (FR)
(72) Inventeur: Campion, Jean-Michel, Jacques, 77950 Moisenay (FR); Cazalens, Michel, Pierre, 77780 Bourron Marlotte (FR); Commaret, Patrice, André, 77950 Rubelles (FR); Rollet, Pascale, 91220 Le Plessis Pate (FR)
(74) Mandataire: Boura, Olivier

(57) **Abrégé**

L'invention se rapporte au domaine des turbomachines et concerne une chambre de combustion (4) pour laquelle l'alimentation en air de dilution est optimisée. L'invention porte plus particulièrement sur une optimisation de la position des trous de dilution (30a, 30b) présents sur les parois (7a, 7b) de la chambre de combustion.

## Description

L'invention se rapporte au domaine des turbomachines et concerne une chambre de combustion pour laquelle l'alimentation en air de dilution est optimisée.
L'invention porte plus particulièrement sur une optimisation de la position des trous de dilution présents sur les parois de la chambre de combustion.

Dans la suite de la description, les termes "amont" ou "aval" seront utilisés pour désigner les positions des éléments de structure les uns par rapport aux autres en direction axiale, en prenant pour référence le sens d'écoulement des gaz. De même, les termes "interne" ou "radialement interne" et "externe" ou "radialement externe" seront utilisés pour désigner les positions des éléments de structure les uns par rapport aux autres en direction radiale, en prenant pour référence l'axe de rotation de la turbomachine.

Une turbomachine comprend un ou plusieurs compresseur(s) délivrant de l'air sous pression à une chambre de combustion où l'air est mélangé à du carburant et allumé afin de générer des gaz de combustion chauds. Ces gaz s'écoulent vers l'aval de la chambre vers une ou plusieurs turbine(s) qui transforme(nt) l'énergie ainsi reçue afin d'entraîner en rotation le ou les compresseur(s) et fournir l'énergie nécessaire, par exemple, à la motorisation d'un avion.

Typiquement, une chambre de combustion utilisée en aéronautique comprend une paroi interne et une paroi externe, reliées entre elles à leur extrémité amont par un fond de chambre. Le fond de chambre présente, espacées circonférentiellement, une pluralité d'ouvertures recevant chacune un dispositif d'injection qui permet l'amenée du mélange d'air et de carburant dans la chambre.

La chambre de combustion est alimentée par du carburant liquide, mélangé à de l'air issu d'un compresseur. Le carburant liquide est amené jusqu'à la chambre par des injecteurs dans lesquels le carburant est vaporisé en fines gouttelettes. Ce carburant est ensuite brûlé au sein de la chambre de combustion, ce qui permet d'élever la température de l'air issu du compresseur.
De façon générale, une chambre de combustion doit répondre à plusieurs impératifs et est dimensionnée en conséquence. Elle doit tout d'abord permettre d'utiliser le carburant de façon optimale, c'est à dire atteindre des rendements de combustion les plus élevés possibles pour tous les régimes de fonctionnement du moteur. Elle doit de plus fournir à la turbine des gaz chauds, dont la répartition de température en sortie de chambre doit être t compatible avec la durée de vie demandée pour la turbine haute pression et son distributeur. Elle doit par ailleurs dégrader le moins possible l'énergie de l'écoulement, et donc générer une perte de pression entre son entrée et sa sortie minimale. Les pièces constitutives de la chambre de combustion doivent enfin avoir une bonne tenue mécanique, ce qui nécessite de refroidir les parois de la chambre.
A l'intérieur de la chambre, la combustion s'effectue en deux phases principales, auxquelles correspondent physiquement deux zones. Dans une première zone, encore appelée zone primaire, le mélange air/carburant est dans les proportions stoechiométriques ou proche de ces proportions. Pour réaliser le mélange air/carburant, l'air est injecté à la fois au niveau des injecteurs, du fond de chambre ainsi qu'à travers les parois de la chambre par une première rangée d'orifices appelés trous primaires. Avoir dans la zone primaire un mélange dans les conditions ou proche des conditions stoechiométriques permet d'obtenir un bon rendement de combustion avec une vitesse de réaction maximale. On appelle vitesse de réaction la vitesse de disparition d'un des constituants du mélange air/carburant. Par ailleurs, pour que la combustion soit complète, le mélange air/carburant doit séjourner suffisamment longtemps dans cette zone primaire. La température atteinte par les gaz issus de la combustion dans la zone primaire est très élevée. Elle peut atteindre par exemple 2000°C, température incompatible avec la bonne tenue mécanique des matériaux de la turbine et de la chambre. Il est donc nécessaire de refroidir ces gaz, ce qui est réalisé dans une seconde zone. Généralement, la zone primaire représente environ le premier tiers de la longueur de la chambre.
Dans la seconde zone, encore appelée zone de dilution, de l'air frais, appelé air de dilution, issu du compresseur, est injecté dans la chambre à travers ses parois grâce à des orifices appelés trous de dilution. Les trous de dilution peuvent avoir tous le même diamètre ou des diamètres différents. L'air de dilution permet de refroidir les gaz issus de la combustion et de préparer les profils de température pour la turbine haute pression et son distributeur. En outre un système de refroidissement des parois de la chambre, par exemple par film et/ou par multiperforation, est mis en place pour assurer la durée de vie des parois de la chambre de combustion..
De façon générale et connue, l'ensemble des trous primaires d'une part, et l'ensemble des trous de dilution d'autre part, sont disposés respectivement à la même position axiale par rapport au fond de chambre, les trous de dilution étant situés en aval des trous primaires. Les positions axiales des trous primaires et des trous de dilution, et en particulier la distance selon la direction axiale entre les trous primaires et de dilution, ainsi que leurs répartitions sur la circonférence des parois de la chambre, constituent des paramètres importants sur lesquels le concepteur joue pour modifier la répartition de température en sortie de la chambre et pour diminuer les émissions polluantes de la chambre.
Dans le cas de chambres dont la longueur est réduite, la distance axiale entre les trous primaires et les trous de dilution devient faible et un phénomène de couplage aérodynamique instationnaire des jets d'air issus de ces deux types d'orifices peut apparaître. Typiquement, ce phénomène peut apparaître lorsque cette distance axiale est inférieure à deux fois le plus grand diamètre des trous de dilution. Ce phénomène, qui génère un battement des deux jets, peut être à l'origine de l'apparition d'instabilités de combustion, ayant un impact négatif direct non seulement sur les performances de la chambre de combustion mais également sur la durée de vie des parois de la chambre ou du fond de chambre.

Comme illustré dans les brevets EP 1096205 et EP 1045204, les trous de dilution peuvent avoir des diamètres différents et il est possible de réaliser plusieurs rangées de trous de dilution se succédant axialement. Ces aménagements peuvent permettre, sur certaines chambres, d'améliorer la combustion et le profil de températures en sortie de la chambre, mais ils ne sont pas applicables dans le cas où la distance axiale entre les trous primaires et les trous de dilution est réduite et ne permettent donc pas d'éviter le phénomène de couplage aérodynamique qui apparaît dans ce cas.

L'objectif de l'invention est, dans le cas de chambres où la distance axiale entre les trous primaires et les trous de dilution est inférieure à deux fois le plus grand diamètre des trous de dilution, de parvenir à éviter l'apparition du phénomène de couplage aérodynamique des jets d'air issus de ces deux types de trous, sans augmenter les émissions polluantes ni avoir d'impact négatif sur la répartition de température en sortie de la chambre, tout en optimisant les possibilités de rallumage.

L'invention permet de résoudre ce problème en proposant une nouvelle définition de la position des trous de dilution sur les parois de la chambre, cette position étant définie par un motif de perçage sur un secteur angulaire des parois, qui se répète sur toute la circonférence de la chambre.

Plus particulièrement, l'invention concerne une chambre de combustion de turbomachine comportant un axe d'écoulement des gaz (Y), une paroi interne annulaire, une paroi externe annulaire, reliées entre elles par un fond de chambre, la paroi interne et la paroi externe étant munies d'au moins une rangée circonférentielle de trous primaires et d'au moins une rangée circonférentielle de trous de dilution, les trous primaires et les trous de dilution étant répartis régulièrement sur la circonférence des parois interne et externe, les trous primaires de la paroi interne étant tous situés à la même distance axiale par rapport au fond de chambre, les trous primaires de la paroi externe étant tous situés à la même distance axiale par rapport au fond de chambre, cette chambre étant remarquable en ce que, sur au moins une des parois interne ou externe, les trous de dilution sont répartis en une première rangée et au moins une seconde rangée, en ce que les trous de dilution de la première rangée sont tous situés à la même distance axiale par rapport aux trous primaires de la paroi interne ou externe considérée, en ce que les trous primaires sont situés à la même position angulaire qu'au moins une partie des trous de dilution de la seconde rangée, et en ce que la position des trous de dilution de la première et de la seconde rangées situés angulairement entre deux trous primaires consécutifs forme un motif répété sur toute la circonférence de la paroi interne ou externe considérée.
Avantageusement, les trous primaires et les trous de dilution étant définis par leurs axes et leurs diamètres, l'intersection entre les axes des trous de dilution de la première rangée et la paroi interne ou externe considérée forme une première ligne de dilution, et l'intersection entre les axes des trous de dilution de la seconde rangée et la paroi interne ou externe considérée, forme au moins une seconde ligne de dilution distincte de la première ligne de dilution.
De façon préférentielle, une ligne moyenne de dilution étant définie par une ligne circonférentielle située à une distance D' de la rangée de trous primaires, la distance D' étant égale à la moyenne des distances axiales entre la rangée de trous primaires et les rangées de trous de dilution, la première ligne de dilution est disposée à une distance axiale par rapport à la ligne moyenne de dilution inférieure ou égale au double du diamètre des trous de dilution de la première rangée, et les secondes lignes de dilution sont disposées à une distance axiale par rapport à la ligne moyenne de dilution inférieure ou égale au double du diamètre des trous de dilution des secondes rangées.

La première ligne de dilution peut être disposée en amont de la ligne moyenne de dilution tandis que les secondes lignes de dilution sont disposées en aval de la ligne moyenne de dilution, ou inversement.
Selon des variantes de l'invention, une des secondes lignes de dilution peut être confondue avec la ligne moyenne de dilution et/ou avec la première ligne de dilution.
Le diamètre des trous de dilution de la première rangée et le diamètre des trous de dilution de la seconde rangée peuvent être égaux ou différents.

Préférentiellement, la chambre de combustion selon l'invention a une longueur axiale inférieure ou égale à 300 mm mais l'invention peut également s'appliquer à tous types de chambre de combustion étant donné que la position relative des trous primaires et des trous de dilution peut constituer un moyen de réglage des émissions polluantes.
L'invention concerne par ailleurs une turbomachine munie d'une telle chambre de combustion.

L'invention sera mieux comprise et d'autres avantages de celle-ci apparaîtront plus clairement à la lumière de la description d'un mode préféré de réalisation et de variantes, donnée à titre d'exemple non limitatif et faite en référence aux dessins annexés, dans lesquels :
- la figure 1 est une vue schématique partielle en coupe d'une turbomachine et plus précisément d'un turboréacteur d'avion ;
- la figure 2 est une vue schématique en coupe d'une chambre de combustion selon l'art antérieur ;
- la figure 3 est une vue de dessus d'un secteur angulaire de la paroi externe d'une chambre de combustion selon l'art antérieur,
- la figure 4 est une vue de dessus d'un secteur angulaire de la paroi externe d'une chambre de combustion selon l'invention.
- les figures 5 à 9 sont des vues de dessus d'un secteur angulaire de la paroi externe d'une chambre de combustion selon différents modes de réalisation de l'invention.

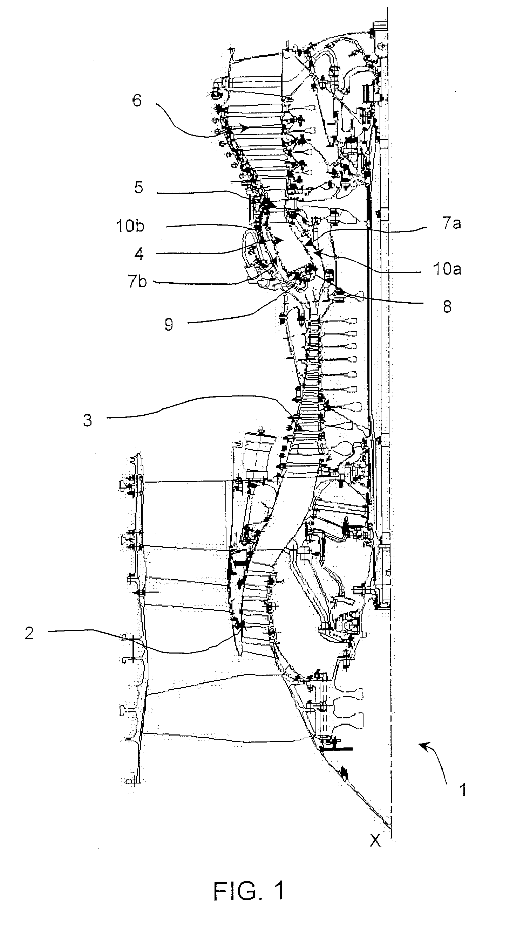

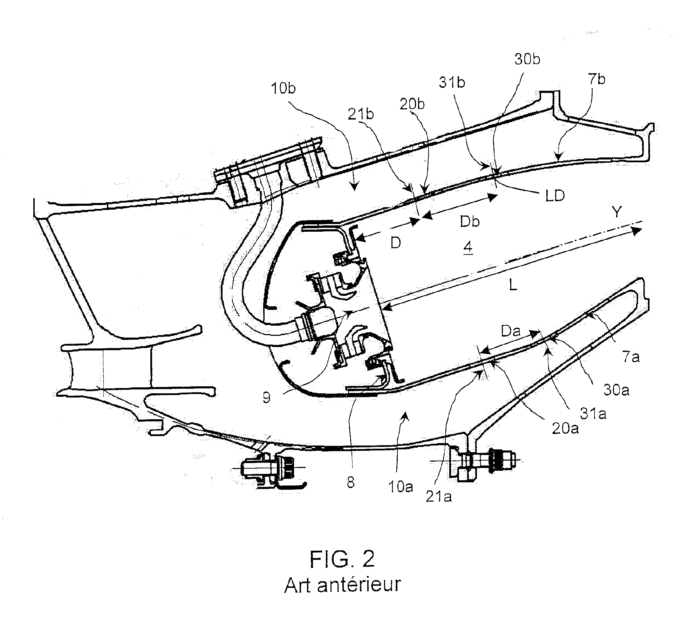

La figure 1 montre en coupe une vue d'ensemble d'une turbomachine 1, par exemple un turboréacteur d'avion, dont l'axe de rotation est repéré X. La turbomachine 1 comprend un compresseur basse pression 2, un compresseur haute pression 3, une chambre de combustion 4, une turbine haute pression 5 et une turbine basse pression 6. La chambre de combustion 4 est du type annulaire et est délimitée par une paroi interne 7a annulaire et une paroi externe 7b annulaire espacées radialement par rapport à l'axe X, et reliées à leur extrémité amont à un fond de chambre annulaire 8. Le fond de chambre 8 comporte une pluralité d'ouvertures, régulièrement espacées circonférentiellement. Dans chacune de ces ouvertures est monté un dispositif d'injection 9. Les gaz de combustion s'écoulent vers l'aval dans la chambre de combustion 4 et alimentent ensuite les turbines 5 et 6 qui entraînent respectivement les compresseurs 3 et 2 disposés en amont du fond de chambre 8, par l'intermédiaire respectivement de deux arbres. Le compresseur haute pression 3 alimente en air les dispositifs d'injection 9, ainsi que deux espaces annulaires 10a et 10b disposés radialement respectivement à l'intérieur et à l'extérieur de la chambre de combustion 4. L'air introduit dans la chambre de combustion 4 participe à la vaporisation du carburant et à sa combustion. L'air circulant à l'extérieur des parois de la chambre de combustion 4 participe, d'une part, à la combustion et, d'autre part, au refroidissement des parois 4a et 4b et des gaz issus de la combustion. Pour cela, l'air pénètre dans la chambre respectivement par une première rangée d'orifices appelés trous primaires et par une seconde série d'orifices appelés trous de dilution. Les trous de dilution peuvent avoir tous le même diamètre ou des diamètres différents. Ces deux types d'orifices sont représentés à la figure 2.

La figure 2 montre de façon plus précise une coupe d'une chambre de combustion 4 selon l'art antérieur. La longueur totale de la chambre de combustion est repérée L.
Les parois interne 7a et externe 7b de la chambre 4 sont munies toutes deux d'une rangée circonférentielle de trous primaires 20a, respectivement 20b dont les axes sont repérés 21 a, respectivement 21 b. En aval de ces trous primaires 20a, 20b est disposée une rangée circonférentielle de trous de dilution 30a, 30b, dont les axes sont repérés 31 a, respectivement 31 b. Sur la paroi interne 7a, tous les trous primaires 20a sont situés à la même distance D du fond de chambre 8. Il en va de même pour les trous de dilution 30a, ainsi que pour les trous primaires 20b et de dilution 30b sur la paroi externe 7b. L'intersection des axes 21 a des trous primaires 20a et de la paroi interne 7a forme une ligne circonférentielle appelée ligne de dilution LD. Il en est de même de l'intersection des axes 21 b et de la paroi externe 7b, de l'intersection des axes 31 a et de la paroi interne 7a et de l'intersection des axes 31 b et de la paroi externe 7b. La distance entre les axes 21 a des trous primaires 20a et les axes 31 a des trous de dilution 30a est repérée Da. La distance entre les axes 21 b des trous primaires 20b et les axes 31 b des trous de dilution 30b est repérée Db. lci, les distances Da et Db sont suffisantes, c'est à dire supérieures ou égales à deux fois le plus grand diamètre des trous de dilution, pour éviter tout risque de couplage aérodynamique entre les jets d'air issus des trous primaires 20a et des trous de dilution 30a d'une part, et entre les jets d'air issus des trous primaires 20b et des trous de dilution 30b d'autre part.

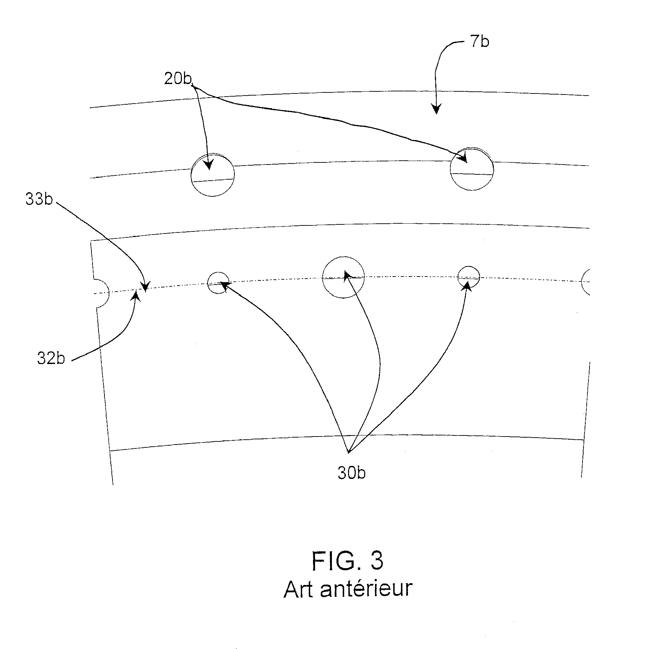

La figure 3 montre une vue de dessus d'un secteur angulaire de la paroi externe 7b de la chambre de combustion 4 selon l'art antérieur. Sur ce secteur, on distingue deux des trous primaires 20b, ainsi que plusieurs trous de dilution 30b. Tous les trous primaires ont le même diamètre tandis que les trous de dilution peuvent, comme illustré ici, avoir des diamètres différents. Les trous primaires 20b sont répartis de façon régulière sur la circonférence de la paroi externe 7b et chaque trou primaire est aligné avec un injecteur de carburant, c'est à dire que pour un injecteur donné, le trou primaire correspondant est situé à la même position angulaire. Les trous de dilution sont eux aussi répartis de façon régulière sur la circonférence de la paroi externe 7b. Pour chaque trou primaire 20b, un trou de dilution 30b est disposé à la même position angulaire, c'est à dire que, selon l'axe Y de la chambre, chaque trou primaire est aligné avec un trou de dilution 30b. Dans le cas représenté à la figure 3, ce sont les trous de dilution 30b dont le diamètre est le plus petit qui sont alignés avec les trous primaires 20b. Les autres trous de dilution 30b, à savoir ceux qui ont le plus grand diamètre, sont intercalés entre les trous de dilution de petit diamètre et disposés à équidistance de ces trous. Les trous de dilution de grand diamètre sont également situés à équidistance des trous primaires 20b les plus proches. Dans l'exemple représenté, il n'y a qu'un trou de dilution de petit diamètre situé circonférentiellement entre deux trous de dilution de grand diamètre consécutifs, mais il pourrait il y en avoir plusieurs, répartis de façon régulière sur la circonférence de la paroi externe 7b.

Lorsque les objectifs de conception concernant par exemple la réduction des émissions polluantes ou les profils de température en sortie de foyer, amènent à réduire la distance D, les trous primaires 20b et les trous de dilution 30b sont alors trop proches. Généralement cela correspond à une distance axiale inférieure à deux fois le plus grand diamètre des trous de dilution. Dans ce cas, le phénomène de couplage aérodynamique des jets d'air issus de ces deux types de trous peut apparaître. Il été découvert qu'en modifiant le positionnement les trous de dilution de façon appropriée, ce phénomène pouvait être évité.

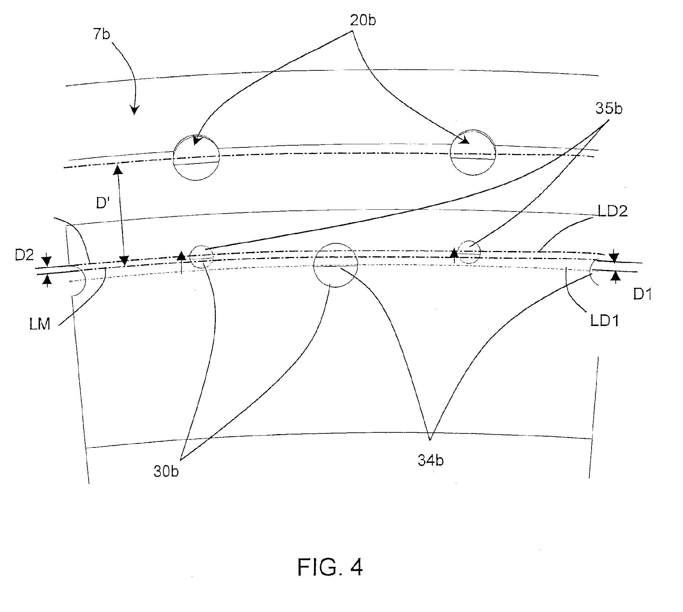

La figure 4, montre une vue de dessus d'un secteur angulaire de la paroi externe 7b d'une chambre de combustion 4 selon l'invention. Sur ce secteur sont représentés deux des trous primaires 20b, ainsi que plusieurs trous de dilution 30b. La position des trous primaires 20b reste inchangée par rapport à l'art antérieur, seul le positionnement des trous de dilution 30b change. Les trous de dilution 30b sont répartis régulièrement sur la circonférence de la paroi externe 7b et peuvent être tous du même diamètre ou, comme illustré ici, de diamètres différents. Dans notre exemple, les trous de dilution 30b se répartissent en un premier ensemble de trous à petit diamètre et un second ensemble de trous à grand diamètre. Les trous de dilution de petit diamètre 35b sont disposés de façon à être alignés avec les trous primaires 20b, c'est à dire qu'ils sont à la même position angulaire. Le trous de dilution de grand diamètre 34b sont disposés entre les trous primaires 20b, à équidistance des trous de dilution de petit diamètre les plus proches. Contrairement à l'art antérieur, l'ensemble des trous de dilution n'est plus situé à la même distance Db des trous primaires 20b. On distingue deux rangées circonférentielles de trous de dilution : une première rangée 34b formée par les trous de dilution situés angulairement entre les trous primaires 20b, formant une première ligne de dilution LD1, une seconde rangée 35b formée par les trous de dilution de petit diamètre, formant une seconde ligne de dilution LD2. Par rapport à l'art antérieur, on constate que les trous de dilution de la seconde rangée 35b sont décalés vers l'amont, c'est à dire vers les trous primaires, par rapport aux trous de dilution de la première rangée 34b. On définit une ligne moyenne de dilution externe LM située à une distance D' de la rangée de trous primaires 20b, la distance D' étant égale à la moyenne des distances axiales entre la rangée de trous primaires et les rangées de trous de dilution. La ligne moyenne est donc disposée entre les lignes de dilution LD1 et LD2.

La distance D' définissant la position de la ligne moyenne de dilution LM est déterminée de la même façon que dans l'art antérieur. L'optimisation de la dilution est réalisée en modifiant la position des axes des trous de dilution de la première rangée 34b et de la seconde rangée 35b par rapport à la ligne moyenne de dilution. Connaissant D', il est alors possible de positionner les trous de dilution de ces deux rangées de façon à s'affranchir du phénomène de couplage aérodynamique tout en respectant les impératifs auxquels doit répondre la chambre. Pour que cette optimisation soit efficace et ne perturbe pas le fonctionnement de la chambre, les axes des trous de dilution de la première rangée 34b doivent être situés, par rapport à la ligne moyenne de dilution, à une distance C1 inférieure au double de leur diamètre. Il en est de même pour la position des axes des trous dilution de la seconde rangée 35b qui doivent être situés, par rapport à la ligne moyenne de dilution, à une distance D2 inférieure au double de leur diamètre. Du plus, la distance D' ne doit pas être modifiée.

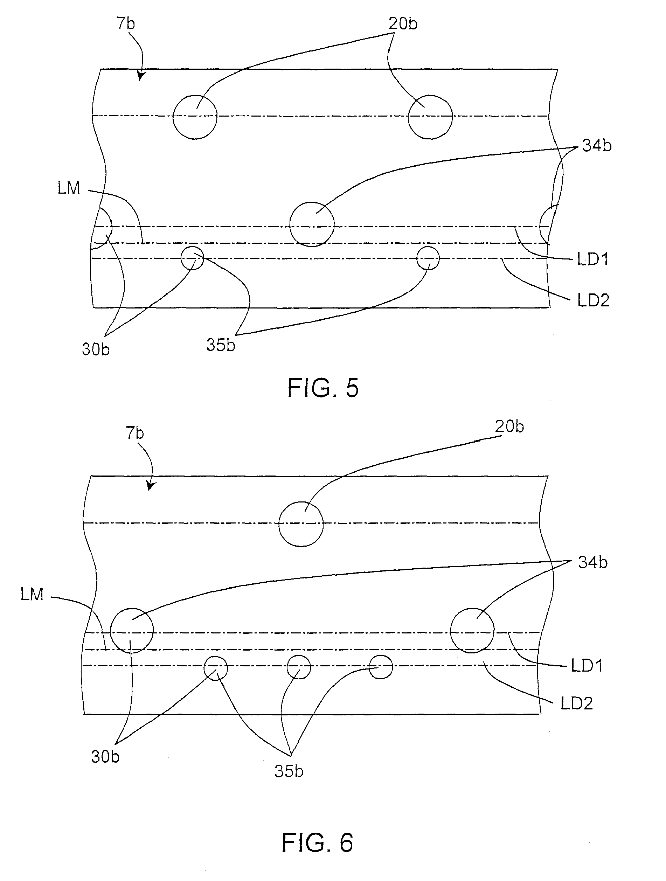

D'autres modes de réalisation sont possibles, dont certains sont illustrés aux figures 5 à 9.

A la figure 5, le mode de réalisation représenté est similaire au mode de réalisation décrit précédemment. Il diffère uniquement en ce que les trous de dilution de la seconde rangée 35b ne sont plus décalés vers l'amont par rapport aux trous de dilution de la première rangée 34b, mais vers l'aval.

Dans les modes de réalisation décrits jusqu'à présent, les première et seconde rangées 34b, 35b, comportaient le même nombre de trous de dilution. Des variantes avec un nombre de trous de dilution différent dans chaque groupe sont possibles.
Par exemple, le figure 6 montre une variante où la seconde rangée 35b comporte trois fois plus de trous de dilution que la première rangée 34b. Dans cet exemple, la dilution, comme précédemment, est définie par la position de la ligne moyenne de dilution externe LM, autour de laquelle sont positionnés une première et une seconde ligne de dilution LD1 et LD2 sur lesquelles sont alignés les axes des trous de dilution des deux rangées. Les axes de la première rangée 34b de trous de dilution sont positionnés sur la première ligne de dilution LD1, située en amont de la ligne moyenne 33b, c'est à dire du côté des trous primaires 20b. Les axes de la seconde rangée 35b de trous de dilution sont positionnés sur la seconde ligne de dilution LD2, en aval de la ligne moyenne 33b. Entre deux trous de dilution consécutifs de la première rangée 34b sont disposés trois trous de dilution de la seconde rangée 35b. Parmi ces trois trous celui qui est situé en position centrale et aligné avec un des trous primaires 20b, c'est à dire qu'il a la même position angulaire. L'ensemble des trous de dilution demeure réparti régulièrement sur la circonférence de la paroi externe 7b.

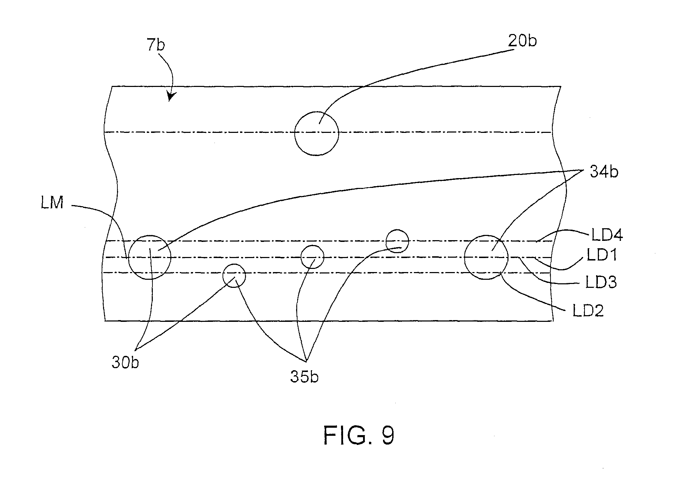

Les trous de dilution du second groupe 35b peuvent avoir leur axe interceptant la paroi externe 7b de façon à former une seule ligne de dilution LD2 comme décrit jusqu'à présent. Mais leurs axes peuvent aussi être positionnés à des distances par rapport à la ligne moyenne de dilution externe LM différentes. Dans ce cas, l'intersection de leur axe avec la paroi externe 7b forme non plus une mais plusieurs lignes de dilutions.

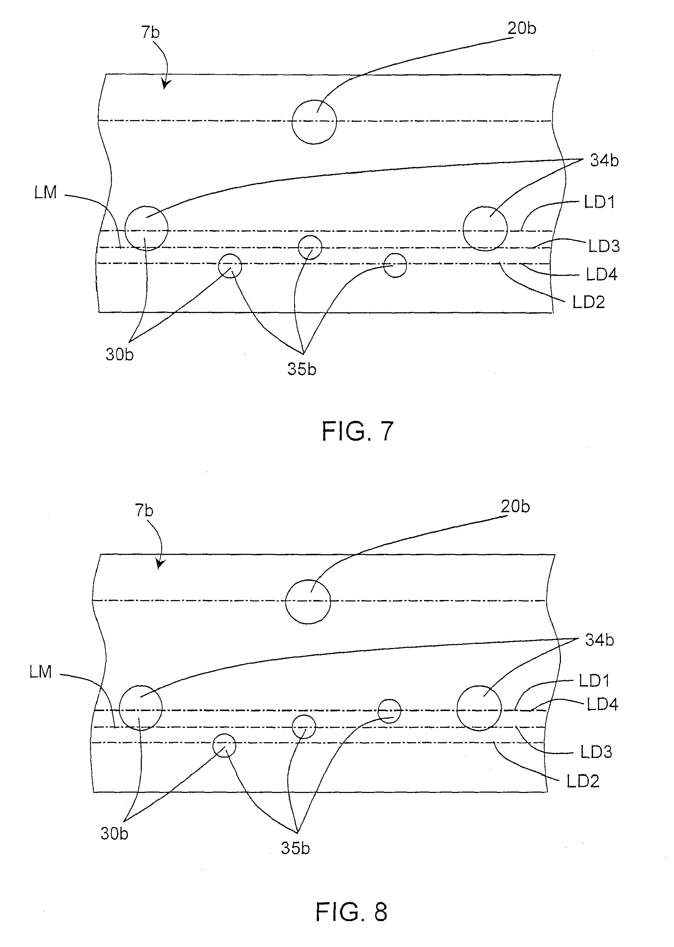

Les figures 7 à 9 illustrent des exemples de réalisation de l'invention dans un tel cas de figure.
Dans ces exemples, la seconde rangée 35b de trous de dilution comporte aussi trois fois plus de trous que la première rangée 34b. Les trous de dilution de la seconde rangée 35b sont répartis sur trois lignes de dilution distinctes LD2, LD3, LD4. Dans une première variante, une de ces lignes de dilution peut-être confondue avec la ligne moyenne de dilution LM, comme illustré à la figure 7. Dans une autre variante, illustrée à la figure 8, une de ces lignes de dilution peut être confondue avec la ligne de dilution LD1 formée par les axes des trous de dilution de la première rangée 34b. Par ailleurs, les lignes de dilution LD2, LD3 et LD4 peuvent être toutes situées en aval des trous de dilution de la première rangée 34b, mais elles peuvent aussi être réparties de part et d'autre des trous de dilution de cette première rangée 34b, comme illustré à la figure 9, ou encore toutes situées en amont de la première rangée 34b.

Dans l'ensemble des modes de réalisation précédemment décrits, la position relative des trous primaires 20b et des trous de dilution 30b peut être entièrement définie en donnant la position de chacun des trous sur un secteur angulaire de la paroi externe 7b. Plus précisément, il suffit de donner la position de chaque trou sur le secteur angulaire situé entre les axes de deux trous primaires 20b consécutifs, le motif ainsi obtenu étant ensuite reproduit sur toute la circonférence de la paroi externe 7b.
La description ci-dessus a été donnée en prenant comme exemple d'application la paroi externe 7b mais l'invention s'applique aussi et de la même façon à la paroi interne 7a.

## Revendications

1. Chambre de combustion de turbomachine comportant un axe d'écoulement des gaz (Y), une paroi interne (7a) annulaire, une paroi externe (7b) annulaire, reliées entre elles par un fond de chambre (8), la paroi interne (7a) et la paroi externe (7b) étant munies respectivement d'au moins une rangée circonférentielle de trous primaires (20a, 20b) et d'au moins une rangée circonférentielle de trous de dilution (30a, 30b), les trous primaires (20a, 20b) et les trous de dilution (30a, 30b) étant répartis régulièrement sur la circonférence des parois interne (7a) et externe (7b), les trous primaires (20a) de la paroi interne (7a) étant tous situés à une même distance axiale (D) par rapport au fond de chambre (8), les trous primaires (20b) de la paroi externe (7b) étant tous situés à la même distance axiale par rapport au fond de chambre (8),
**caractérisée en ce que** sur au moins une des parois interne (7a) ou externe (7b), les trous de dilution (30a, 30b) sont répartis en une première rangée (34b) et au moins une seconde rangée (35b), **en ce que** les trous de dilution de la première rangée (34b) sont tous situés à la même distance selon l'axe (Y) de la chambre par rapport aux trous primaires de la paroi interne (7a) ou externe (7b) considérée, **en ce que** les trous primaires sont situés à la même position angulaire qu'au moins une partie des trous de dilution de la seconde rangée (35b), et **en ce que** la position des trous de dilution de la première (34b) et de la deuxième (35b) rangée situés angulairement entre deux trous primaires (20b) consécutifs forme un motif répété sur toute la circonférence de la paroi interne (7a) ou externe (7b) considérée.

2. Chambre de combustion selon la revendication 1,
**caractérisée en ce que** les trous primaires (20b) et les trous de dilution étant définis par leurs axes (21 a, 21 b, 31 a, 31 b) et leurs diamètres, l'intersection entre les axes des trous de dilution de la première rangée (34b) et la paroi interne (7a) ou externe (7b) considérée forme une première ligne de dilution (LD1), et l'intersection entre les axes des trous de dilution des secondes rangées (35b) et la paroi interne (7a) ou externe (7b) considérée, forme au moins une seconde ligne de dilution (LD2, LD3, LD4) distincte de la première ligne de dilution (LD1).

3. Chambre de combustion selon la revendication 2, **caractérisée en ce que** une ligne moyenne de dilution (LM) étant définie par une ligne circonférentielle située à une distance D' de la rangée de trous primaires 20b, la distance D' étant égale à la moyenne des distances axiales entre la rangée de trous primaires et les rangées de trous de dilution, la première ligne de dilution (LD1) est disposée à une distance axiale par rapport à la ligne moyenne de dilution (LM) inférieure ou égale au double du diamètre des trous de dilution de la première rangée (34b), et **en ce que** les secondes lignes de dilution (LD2, LD3, LD4) sont disposées à une distance axiale par rapport à la ligne moyenne de dilution (33b) inférieure ou égale au double du diamètre des trous de dilution des secondes rangées (35b).

4. Chambre de combustion selon la revendication 3, **caractérisée en ce que** la première ligne de dilution (LD1) est disposée en amont de la ligne moyenne de dilution (LM) et **en ce que** les secondes lignes de dilution (LD2, LD3, LD4) sont disposées en aval de la ligne moyenne de dilution (LM).

5. Chambre de combustion selon la revendication 3, **caractérisée en ce que** la première ligne de dilution (LD1) est disposée en aval de la ligne moyenne de dilution (LM) et **en ce que** les secondes lignes de dilution (LD2, LD3, LD4) sont disposées en amont de la ligne moyenne de dilution (LM).

6. Chambre de combustion selon la revendication 3, **caractérisée en ce que** la première ligne de dilution (LD1) est disposée en amont de la ligne moyenne de dilution (LM) et **en ce que** une des secondes lignes de dilution ( LD2, LD3, LD4) est confondue avec la ligne moyenne de dilution (LM), les secondes lignes de dilution restantes étant disposées en aval de la ligne moyenne de dilution (LM).

7. Chambre de combustion selon la revendication 3, **caractérisée en ce que** la première ligne de dilution (LD1) est disposée en aval de la ligne moyenne de dilution (LM) et **en ce que** une des secondes lignes de dilution (LD2, LD3, LD4) est confondue avec la ligne moyenne de dilution (LM), les secondes lignes de dilution restantes étant disposées en amont de la ligne moyenne de dilution (LM).

8. Chambre de combustion selon la revendication 3, **caractérisée en ce que** la première ligne de dilution (LD1) est disposée en amont de la ligne moyenne de dilution (LM) et **en ce qu'**au moins une des secondes lignes de dilution (LD2, LD3, LD4) est disposée en amont de la ligne moyenne de dilution (LM), les secondes lignes de dilution restantes étant disposées en aval de la ligne moyenne de dilution.

9. Chambre de combustion selon la revendication 3, **caractérisée en ce que** la première ligne de dilution (LD1) est disposée en aval de la ligne moyenne de dilution (LM) et **en ce qu'**au moins une des secondes lignes de dilution (LD2, LD3, LD4) est disposée en aval de la ligne moyenne de dilution (LM), les lignes de dilution restant étant disposées en amont de la ligne moyenne de dilution.

10. Chambre de combustion selon la revendication 3, **caractérisée en ce que** la première ligne de dilution (LD1) est disposée en amont de la ligne moyenne de dilution (LM) et **en ce que** une des secondes lignes de dilution (LD2, LD3, LD4) est confondue avec la première ligne de dilution (LD1), les secondes lignes de dilution restantes étant disposées en aval de la ligne moyenne de dilution (LM).

11. Chambre de combustion selon la revendication 3
**caractérisée en ce que** la première ligne de dilution (LD1) est disposée en aval de la ligne moyenne de dilution (LM) et **en ce que** une des secondes lignes de dilution (LD2, LD3, LD4) est confondue avec la première ligne de dilution (LD1), les secondes lignes de dilution restantes étant disposées en amont de la ligne moyenne de dilution (LM).

12. Chambre de combustion selon la revendication 3, **caractérisée en ce que** la première ligne de dilution (LD1) est disposée en amont de la ligne moyenne de dilution (LM) et **en ce que** une des secondes lignes de dilution (LD2, LD3, LD4) est confondue avec la première ligne de dilution (LD1), une autre des secondes lignes de dilution est confondue avec la ligne moyenne de dilution (LM), les secondes lignes de dilution restantes étant disposées en aval de la ligne moyenne de dilution.

13. Chambre de combustion selon la revendication 3, **caractérisée en ce que** la première ligne de dilution (LD1) est disposée en aval de la ligne moyenne de dilution (LM) et **en ce que** une des secondes lignes de dilution (LD2, LD3, LD4) est confondue avec la première ligne de dilution (LD1), une autre des secondes lignes de dilution est confondue avec la ligne moyenne de dilution (LM), les secondes lignes de dilution restantes étant disposées en amont de la ligne moyenne de dilution.

14. Chambre de combustion selon la revendication 3,
**caractérisée en ce que** la première ligne de dilution (LD1) est disposée en amont de la ligne moyenne de dilution (LM) et **en ce que** une des secondes lignes de dilution (LD2, LD3, LD4) est confondue avec la première ligne de dilution (LD1), au moins une des autres secondes lignes de dilution (LD2, LD3, LD4) étant disposée en amont de la ligne moyenne de dilution (LM), les secondes lignes de dilution restantes étant disposées en aval de la ligne moyenne de dilution.

15. Chambre de combustion selon la revendication 3, **caractérisée en ce que** la première ligne de dilution (LD1) est disposée en aval de la ligne moyenne de dilution (LM) et **en ce que** une des secondes lignes de dilution (LD2, LD3, LD4) est confondue avec la première ligne de dilution (LD1), au moins une des autres secondes lignes de dilution étant disposée en aval de la ligne moyenne de dilution (LM), les secondes lignes de dilution restantes étant disposées en amont de cette ligne.

16. Chambre de combustion selon l'une quelconque des revendications précédentes **caractérisée en ce que** le diamètre des trous de dilution de la première rangée (34b) et le diamètre des trous de dilution de la seconde rangée (35b) sont différents.

17. Turbomachine munie d'une chambre de combustion selon l'une quelconque des revendications précédentes.
